Europäisches Patentamt

**European Patent Office**

**Office européen des brevets**

(19)

(11) Publication number: **0 134 363**
**A2**

# (12) EUROPEAN PATENT APPLICATION

(21) Application number: **83305364.8**

(22) Date of filing: **13.09.83**

(51) Int. Cl.⁴: **F 16 J 12/00**
**B 29 D 3/02, F 24 H 1/18**

(43) Date of publication of application:
**20.03.85  Bulletin  85/12**

(84) Designated Contracting States:
**AT BE CH DE FR GB IT LI NL SE**

(71) Applicant: **EVERLAST HOT WATER SYSTEMS
(PROPRIETARY) LIMITED
27 Auckland Street Paarden Eiland
Cape Town Cape Province(ZA)**

(72) Inventor: **Kempski, Rolf Dieter
30 Llandudno Road Llandudno
Cape Town Cape Province(ZA)**

(74) Representative: **Sheard, Andrew Gregory et al,
Kilburn & Strode 30, John Street
London WC1N 2DD(GB)**

(54) **Container for use as a pressure vessel in a hot water system.**

(57) A container 10 for use as a pressure vessel in a hot water system comprises a rotationally moulded wall 12 of high density cross-linked polyethylene material which may or may not contain a glass fibre filling, a layer 14 of glass fibre reinforced epoxy resin on the outside of the wall, and a heat insulating mantle 18 of expanded polyurethane on the outside of the layer 14. The mantle 18 is provided with an outer protective shell 20. The wall has an ellipsoidal inner surface 26 and is provided with screw threaded brass or 'Nylon" sockets 30 embedded therein during rotational moulding.

EP 0 134 363 A2

./...

FIG 1

CONTAINER FOR USE AS A PRESSURE VESSEL IN A HOT WATER SYSTEM.

THIS INVENTION relates to a container. More particularly, it relates to a storage container for a hot water system.

Hot water storage containers (often referred to simply as cylinders) of copper, steel and blow moulded polypropylene are known to Applicant. Copper cylinders are probably the most widely used but, because of their somewhat limited resistance to bursting, require header tanks or pressure reducing valves so that they are never subjected to full mains pressure. Steel cylinders are stronger but are prone to corrosion. To minimise corrosion, the cylinders are enamel lined and have a protective electrode. Once the electrode has been eaten away, however, the enamel lining is attacked, and when the steel is exposed to water action, corrosion proceeds at a fairly rapid rate. Blow moulded hot water cylinders of synthetic plastics material are not subject to corrosion and are sufficiently strong to withstand mains pressure. However, moulding apparatus used in the blow moulding process needs to be able to withstand substantial pressures. This makes the apparatus, and hence the items which are moulded, expensive, particularly for relatively large items such as hot water cylinders. Once an inner liner has been blow moulded, it must thereafter be wound with a filament for strengthening

-2-      0134363

purposes. This further increases the cost. Additionally, only one port can be provided in such a blow moulded cylinder.

An object of the present invention is to provide a storage container for a hot water system which is strong enough to withstand full mains pressure but is cheaper to produce than known cylinders.

According to one aspect of the invention there is provided a container for use as a pressure vessel in a hot water system, the container comprising a wall of plastics material which defines a storage space for hot water under pressure, and a mantle of heat insulating material on the outside of the wall, characterised thereby that the wall is rotationally moulded.

The wall may be provided with fibre reinforcing. In a first form of the invention said fibre reinforcing is provided by a layer of glass fibre reinforced resin on the outside of the wall, between the wall and the heat insulating mantle. In a second form of the invention said fibre reinforcing is provided by glass fibres embedded in the wall. In a third form of the invention said fibre reinforcing is provided by a layer of glass fibre reinforced resin on the outside of the wall, between the wall and the heat insulating mantle, and by glass fibres embedded in the wall.

The heat insulating material of the mantle may be an expanded plastics material. On the outside of the heat insulating mantle, there may be a protective shell. The heat insulating mantle may be provided by a plastics material which is expanded and of low density near the wall, and hard and of high density near the outer surface, the part of high density forming said protective shell.

The container may include at least one screw-threaded connection of a material different to that of the wall, the screw-threaded connection being embedded in the wall.

Said wall may comprise an outer layer of rotationally moulded strong synthetic plastics material and an inner layer of rotationally moulded water-impervious synthetic plastics material. Said outer layer may be of a polymeric amide and said inner layer may be of polyethylene.

The invention extends to a method of producing a container for use as a pressure vessel in a hot water system, the method being characterised thereby that it comprises rotationally moulding a first charge of strong synthetics plastics material to form an outer layer, allowing the mould to cool sufficiently for the outer layer to retain its shape when the mould is brought to a stand-still, placing a second charge of synthetic plastics material into the previously moulded outer layer, and rotationally moulding said second charge onto the inner face of the outer layer to form a water-impervious inner layer.

Said first charge may be of a polymeric amide and said second charge may be of polyethylene.

According to another aspect of the invention there is provided a storage container for a hot water system, the container comprising a wall having an inside surface which defines an oblong storage space for hot water, and a mantle of heat insulating material on the outside of the wall, the container being characterised thereby that said inside surface, for a major portion of the length of the storage space, converges from a central portion of the storage space towards each end of the storage space.

Said inside surface may be a surface of rotation about a longitudinally extending axis. It may, in one form of the invention, be substantially ellipsoidal.

The wall may be provided with a first pair of screw-threaded connections, one at each opposite end of the wall; and a second pair of screw threaded connections arranged on opposite sides of the wall between the ends of the wall.

The wall may be of a suitable plastics material, and the screw-threaded connections of a material different to that of the wall, the screw-threaded connections being embedded in the wall.

The invention will now be described in more detail by way of example, with reference to the accompanying drawings.

In the drawings :
Figure 1 is a longitudinal section of a hot water container according to the invention;
Figure 2 is an end view of a wall forming part of the container;
Figure 3 is an enlarged view of the part indicated at III in Figure 1, and

Figure 4 illustrates an insert which is used in an alternative construction.

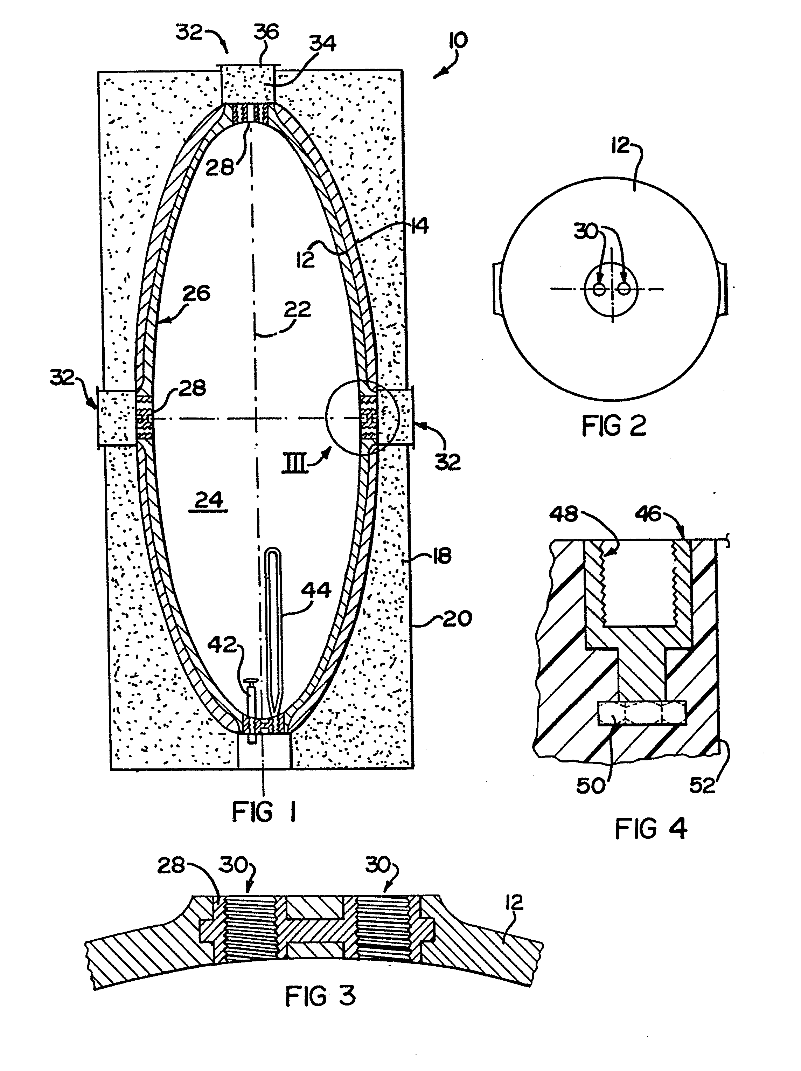

Referring now to Figures 1 to 3 of the drawings in more detail, reference numeral 10 in Figure 1 generally indicates a container comprising a wall 12 of high density, cross-linked polyethylene, and a reinforcing layer 14 of glass fibre reinforced epoxy or other suitable resin on the outside of the wall. On the outside of the reinforcing layer 14 there is a mantle 18 of foamed or expanded polyurethane heat insulation. On the outside of the insulation 18 there is a protective shell 20 of a suitable hard plastics material. If the polyurethane can be provided with a satisfactory external finish, the hard plastics shell can be omitted. If desired, the polyurethane may be a flame retardant polyurethane.

As will be seen in Figure 1, the container 10 is elongate or oblong, having a longitudinal axis 22. The wall 12, the reinforcing layer 14, the insulation 18, and the protective shell 20 are all round in cross section, having a common axis of symmetry, coinciding with the longitudinal axis 22.

The wall 12 defines a storage space 24 for hot water under pressure and has an inside surface 26 which is ellipsoidal in shape.

The wall 12 further has brass or 'Nylon' inserts 28, there being a first pair of inserts, one at each end of the wall, and there further being a second pair of inserts, arranged on opposite sides of the wall 12, between the ends thereof. The inserts 28 are embedded in the material of the wall 12. Each insert 28 is provided with a pair of screw threaded sockets 30.

In the region of each of the inserts 28 there is an opening in the mantle 18 and the protective shell 20, the opening being closed by a removable plug 32 comprising an inner portion 34 of the same material as that of the mantle, and an outer portion 36 of the same material as that of the protective shell.

The wall 12 is made by rotational moulding. This takes place by placing a suitable quantity of high density, cross-linked polyethylene (in powder or granule form) in a hollow metal mould. The mould is in two halves which are clamped together when moulding is to take place. The mould could be in more than two pieces.

The inserts 28 are held in position inside the mould while moulding is taking place. During moulding the mould is rotated in different directions and at the same time heated, causing the polyethylene material to melt and spread across the inner surface of the mould. The inserts 28 become embedded in the wall 12. The mould is thereafter allowed to cool, is opened up, and the wall which has formed therein removed.

If desired the polyethylene may contain a glass fibre filling. Such material is available from Du-Pont in Canada, under the name SCLAIR-DXG93-03G. This will result in the wall 12 containing glass fibre reinforcing.

Thereafter, a strip of glass fibre material is wound in several layers, which cross one another, around the wall 12, the glass fibre material being impregnated with liquid resin to which a hardener has been added. Once the resin has hardened, to form the layer 14, the container is further built up by adding the mantle 18 and the protective shell 20.

The mantle 18 and protective shell 20 may be of unitary construction, both being of polyurethane material, but the material near the wall 12 being expanded and of low density, whereas, near the outside, it is hard and of high density, thus forming the protective shell 20.

The container 10 is suitable for installation either in the vertical mode, in which the longitudinal axis 22 will be upright, or in the horizontal mode, in which the longitudinal axis 22 will extend horizontally.

If the container 10 is, for example, to be installed in the vertical mode, the two plugs 32 at the ends of the container are removed. An inlet device 42 is screwed into one of the sockets 30 at the bottom end and an electric heating element 44 into the other socket 30 at that end. An inlet pipe (not shown) from a water mains supply is connected to the inlet device 42. Furthermore, an outlet pipe (not shown) leading to a hot water tap or taps is screwed into one of the sockets 30 at the top end and a safety plug is screwed into the other socket at that end. This latter socket may have special thread so that it can be closed only by a special plug which complies with prescribed specifications.

Alternatively, if the container is to be mounted in the horizontal mode, the other two plugs 32 will instead be removed and the corresponding connections made to the inserts 28 in the sides of the container instead of to the inserts 28 at the ends of the container.

The inlet device 42 is provided with a baffle to reduce to a minimum mixing of cold water entering the storage space with hot water already there.

The sloping inside surfaces 26 of the wall 12 will be effective to reduce the mixing and interchange of heat between the cold water at the bottom of the container and the hot water at the top of the container, whether the container is installed in the vertical mode or in the horizontal mode.

The container is designed to withstand a pressure of about 400kPa to 600kPa, the wall thickness of the wall 12 being about 6 to 12 mm. If desired, a pressure reducing valve may be connected in the mains. inlet pipe so that the pressure in the container will not rise above this design pressure. The safety plug referred to earlier will serve as an additional safety, and will allow water to escape from the container should either the pressure or the temperature in the container exceed predetermined limits.

The inserts 28 which would otherwise be unused, may be used to connect the container to a solar heating panel in order to assist in heating the water in the container directly or indirectly, or to a heat exchanger (calorifier) of another source.

Instead of forming the wall 12 by rotational moulding and the layer 14 by winding, it is possible to use a composite rotationally moulded wall consisting of an inner layer and an outer layer. In this form the outer layer is produced by rotationally moulding a strong syntehtic plastics material such as a polymeric amide. 'Nylon 6' is a suitable material. The mould is permitted to cool after the 'Nylon 6' has been spread over the inner surface of the mould until a temperature is reached at which, when the mould is temporarily stopped, the outer layer does not deform or sag. Thereafter, while the 'Nylon 6' is still sufficiently hot, a shot of a synthetic plastics material which melts at a lower temperature than 'Nylon 6', e.g. polyethylene is placed in the mould. The mould is then rotated again, so that the new shot melts and spreads over the inner face of the previously moulded 'Nylon 6'. The temperature to which the mould is cooled after the inner layer has been formed is, of course, sufficiently high to melt the newly introduced shot.

The polyethylene inner layer is required because the strong 'Nylon 6' absorbs water, and the function of the inner layer is to isolate the outer shell from the water in the container.

Turning now to Figure 4, this illustrates an alternative form of insert 46 which can be used instead of the inserts 28 shown in Figures 1 and 3. The insert 46 comprises an internally threaded socket 48 integral with a head 50. A group of these inserts is provided within the mould in place of each insert 28. The inserts are arranged in a circle and the mould is such that the inserts are in a flat area. When rotational moulding takes place the inserts become embedded in the wall. On opening of the mould, the sockets 48 are exposed.

Once it has been decided where the inlet and outlet pipe connections and the electrical connections are to be made, openings 52 are cut in the composite wall within appropriate ones of the circular areas bounded by the groups of inserts 46. Thereafter plates (not shown) are secured to the container by means of bolts (not shown) screwed into the sockets 48. The plates have holes in them for receiving pipes or electrical connections. A suitable gasket (not shown) is provided between the plate and the outer shell.

If the insert of Figure 4 is used in conjunction with a container which uses a water absorbing strong synthetic plastics material as its outer layer, then the openings 52 must be lined with polyethylene to prevent water reaching the outer layer.

To improve resistance to deformation and bursting when the container is subjected to internal pressure, the inner face of the mould can be formed with a series of grooves. These are preferably circular and co-axial with the axis 22. Thus the outer wall is formed with a series of circumferentially extending external ribs which increase the strength of the container. It will be understood that if the ribs extend circumferentially, the mould must split along a parting line which runs in the longitudinal direction.

11. 0134363

CLAIMS :

1. A container for use as a pressure vessel in a hot water system, the container comprising a wall of plastics material which defines a storage space for hot water under pressure, and a mantle of heat insulating material on the outside of the wall, characterised in that the wall (12) is rotationally moulded.

2. A container according to Claim 1, characterised in that the wall is provided with fibre reinforcing.

3. A container according to Claim 1 or 2, characterised in that the heat insulating material of the mantle (18) is an expanded plastics material.

4. A container according to Claim 3, characterised in that, on the outside of the heat insulating mantle (18), there is a protective shell (20).

5. A container according to Claim 1, characterised in that said wall comprises an outer layer of rotationally moulded strong synthetic plastics material and an inner layer of rotationally moulded water-impervious synthetic plastics material.

6. A container according to Claim 5 characterised in that said outer layer is of a polymeric amide and said inner layer is of polyethylene.

7.      A container according to any one of the preceding claims, characterised in that it includes at least one screw-threaded connection (30,46) of a material different to that of the wall, the screw-threaded connection being embedded in the wall.

8.      A method of producing a container for use as a pressure vessel in a hot water system, the method being characterised in that it comprises rotationally moulding a first charge of strong synthetics plastics material to form an outer layer, allowing the mould to cool sufficiently for the outer layer to retain its shape when the mould is brought to a stand-still, placing a second charge of synthetic plastics material into the previously moulded outer layer, and rotationally moulding said second charge onto the inner face of the outer layer to form a water-impervious inner layer.

9.      A storage container for a hot water system, the container comprising a wall (12) having an inside surface (26) which defines an oblong storage space (24) for hot water, and a mantle (18) of heat insulating material on the outside of the wall, the container being characterised in that said inside surface, for a major portion of the length of the storage space, converges from a central portion of the storage space towards each end of the storage space.

10.     A container according to Claim 9, characterised in that said inside surface (26) is substantially ellipsoidal.

11.     A container according to Claim 9 or 10, characterised in that the wall (12) is provided with a first pair of screw-threaded connections (30), one at each opposite end of the wall, and a second pair of screw-threaded connections (30) arranged on opposite sides of the wall between the ends of the wall, that the wall (12) is of a suitable plastics material, that the screw-threaded connections (30) are of a material different to that of the wall, and that the screw-threaded connections are embedded in the wall.

12.     A hot water system comprising a pressure vessel having a wall of plastics material, the wall defining a storage space for hot water under pressure, and a water heater inside the storage space, characterised in that the wall (12) is rotationally moulded.

FIG I

FIG 2

FIG 3

FIG 4